# EUROPEAN PATENT SPECIFICATION

(11) **EP 1 038 711 B1**
(45) Date of publication and mention of the grant of the patent: **14.01.2004**
(21) Application number: 00302396.7
(22) Date of filing: 23.03.2000
(51) Int. Cl.: B60J 10/00, B60R 13/04, B60R 13/06, B60R 16/04

(54) **Sealing, trimming and finishing strips and methods of mounting them**
Dicht-, Trimm- und Profilleisten und Verfahren zum Montieren derselben
Bandes d'étanchéité, de garnissage et de finition et leur procédé de montage

(30) Priority: 25.03.1999 GB 9906799
(43) Date of publication of application: 27.09.2000
(73) Proprietor: GenCorp Property Inc., Sacramento, CA 95853-7012 (US)
(72) Inventor: Gallas, Gérard, 44300 Nantes (FR); Huret, Augustin, 28800 Bouville (FR)
(74) Representative: Foster, David Martyn

(56) References cited:
- GB-A- 2 036 840
- US-A- 4 250 596
- US-A- 4 617 220
- US-A- 5 575 485
- PATENT ABSTRACTS OF JAPAN vol. 018, no. 644 (M-1718), 7 December 1994 (1994-12-07) & JP 06 249342 A (KINUGAWA RUBBER IND CO LTD), 6 September 1994 (1994-09-06)

## Description

The invention relates to a sealing, trimming or finishing strip, including an attachment part for securing the strip in a mounted position against a mount, the attachment part comprising both adhesive means and magnetic means.

The invention also relates to a sealing, trimming or finishing strip for attachment to a mount, comprising longitudinally extending flexible material carrying magnetic means and adhesive means for magnetically and adhesively securing the flexible material to the mount.

The invention further relates to a method of securing a sealing, trimming or finishing strip in position on a mount, in which the strip is secured on the mount by both magnetic and adhesive securing, and wherein adhesive is applied to the strip and the strip is placed in contact with the mount with the adhesive in contact therewith.

Such strips and methods are shown, for example, in JP 6249342. As shown therein, two lengths of double-sided adhesive tape are secured, generally parallel to each other, on a face of a length of flexible material. A longitudinal magnetic member extends along the face of the flexible material, between the two adhesive tapes, and protrudes further from the face than the adhesive tapes to enable it to locate in a groove in the mount. In this way, the strip of the flexible material is properly located with reference to the mount, the strip being adhesively secured to the mount by the adhesive tapes after protective covers have been removed therefrom.

With such an arrangement, it is necessary to provide a groove in the mount to receive the protruding magnetic member. Inevitable dimensional tolerances may also have the effect that the protruding magnetic member prevents the adhesive tapes from securing properly to the mount.

According to a first aspect of the invention, therefore the strip as first set forth above is characterised in that the adhesive means protrudes further from the attachment part than the magnetic means before the strip is in the mounted position such that, in the mounted position, the magnetic means holds the adhesive means in compression against the mount.

The strip known from JP 6249342 is in the form of a generally planar strip of flexible material for fixing to one surface of a panel-shaped mount. According to a second aspect of the invention, therefore, the strip as secondly set out above is characterised in that the flexible material is formed as first and second attachment parts secured together to form opposite sides of a channel for embracing the mount and presenting first and second facing mounting surfaces, the magnetic means and the adhesive means comprising first magnetic means and first adhesive means carried by the first mounting surface for magnetically and adhesively securing that surface to one face of the mount and second magnetic means and second adhesive means carried by the second mounting surface for magnetically and adhesively securing that surface to the opposite face of the mount.

The method of mounting the strip shown in JP 6249342 employs double-sided adhesive tapes to provide the adhesive securing step. Such tapes are convenient to use but may not provide a sufficiently strong adhesive bond. Therefore, in accordance with a third aspect of the invention, the known method as thirdly set forth above is characterised in that the adhesive is a curable adhesive, and in that the method further includes the step of holding the strip magnetically to the mount so that the adhesive is under compression while the adhesive cures.

Sealing, trimming and finishing strips embodying the invention for use in motor vehicle body construction and methods for fixing such strips in position according to the invention, will now be described, by way of example only, with reference to the accompanying diagrammatic drawings in which:
Figure 1 is a cross-section through a known sealing strip, in the form of a door seal;
Figure 2 is a cross-section through one of the strips embodying the invention, at an initial stage during its mounting;
Figure 3 corresponds to Figure 2 but shows the strip mounted in position;
Figure 4 is a cross-section through another of the strips embodying the invention, in the form of a waist belt for sealing against a window glass;
Figure 5 is a cross-section through a further one of the strips embodying the invention, in the form of a door seal, during a stage in its mounting; and
Figure 6 shows the strip of Figure 5 mounted in position.

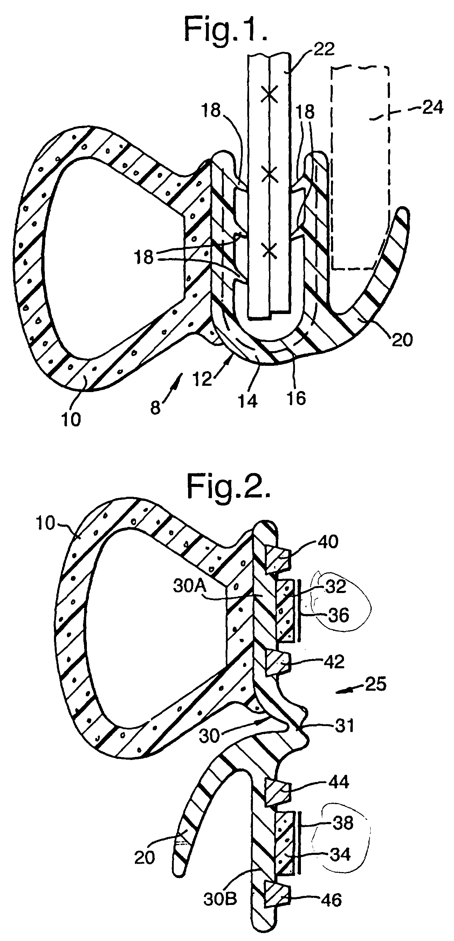

The conventional door seal 8 shown in Figure 1 comprises a hollow tubular sealing part 10, such as formed in vulcanised cellular or foamed rubber, fixed to a channel-shaped gripping part 12. The latter comprises channel-shaped compact (non-cellular) rubber or plastics material 14 such as pvc, in which is embedded a channel-shaped metal reinforcement or carrier 16. The material 14 is usually produced by an extrusion process using a cross-head extruder to incorporate the carrier 16. The extrusion process advantageously also produces integral gripping lips 18 which may be made of softer material than the material 14. The material 14 may also be extended, by the extrusion process, to produce a so-called cosmetic lip 20. The sealing part 10 may be produced separately and attached to the gripping part 12 by adhesive. Instead, it can be co-extruded with the gripping part 12.

In use, the gripping part 12 frictionally engages a mount in the form of the flange 22 running around a door opening in a vehicle, where the inner and outer body panels come together and are spot-welded. The gripping part 12 becomes firmly attached to the flange 22 by the frictional contact between the lips 18 and the flange, assisted by the resilience of the carrier 16. In this way, the gripping part 12 mounts the sealing part 10 to run around the door opening so as to face the closing door and to be partially compressed thereby to produce weather-proof sealing. The cosmetic lip 20, on the inside of the door opening, embraces the edge of the interior trim of the passenger compartment, shown dotted at 24.

Such a strip is relatively complex to mount and to manufacture. The incorporation of the carrier 16 increases its weight. Furthermore, it is held in position merely by friction.

In Figure 2, a strip 25 embodying the invention comprises a hollow tubular sealing part 10 generally corresponding to the sealing part 10 in Figure 1. The sealing part 10 is mounted on an attachment part 30 which comprises, in this example, two portions 30A and 30B made of compact (non-cellular) rubber or plastics material which are hinged together by an integral hinge 31. The attachment part 30 may be produced by extrusion. The sealing part 10 may be co-extruded with the attachment part 30 or produced separately and adhesively secured thereto. As shown in Figure 2, the portion 30B of the attachment part 30 includes a cosmetic lip 20.

In addition, the strip 25 shown in Figure 2 includes two double-sided adhesive tapes 32 and 34 which are respectively mounted on corresponding faces of the portions 30A and 30B. As shown in Figure 2, the outwardly facing surface of each of the tapes 32,34 is covered by a protective ribbon 36,38.

In addition, flexible magnet strips 40,42,44 and 46 are mounted on the portions 30A and 30B of the attachment portion 30 to run along the length thereof alongside the tapes 32,34.

The flexible magnet strips 40,42,44 and 46 can be produced using a known technique, such as by mixing a ferrite powder in a rubber or thermoplastic matrix and subjecting the resultant profile to an intense magnetic field which confers a saturated permanent magnetised state to the material. Preferably, multipolar magnetisation is produced. The magnet strips 40,42,44 and 46 may, for example, be of the type FERRIFLEX (Trade Mark), using ferrite powder in an EPDM or nitrile matrix. The magnet strips 40,42,44 and 46 are flexible and are advantageously trapezoidal in cross-section, as shown in Figure 2. This shape allows good flexibility and substantial thickness which increases the magnetic force. In addition, the trapezoidal form produce good mechanical location of the magnets 40,42,44 and 46 within the portions 30A and 30B of the gripping part 30.

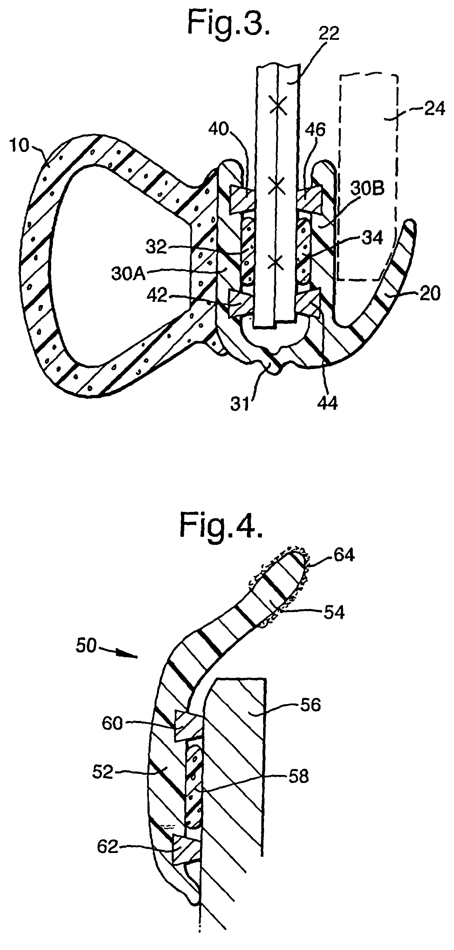

In order to fit the strip of Figure 2 in position on the mounting flange 22 (which is normally made of metal), the portion 30A of the gripping part 30 is applied to one face of the flange 22 as shown in Figure 3, after removal of the protective ribbon 36 from the adhesive tape 32. The portion 30A is pressed into good adhesive contact with the surface of the flange so that the magnet strips 40 and 42 come into contact with and become magnetically attached to this face of the flange. The protective ribbon 38 on the adhesive tape 34 is then removed and the opposite portion 30B of the attachment part 30 is then hinged into contact with the opposite face of the flange 22 so that the adhesive tape 34 becomes adhesively attached to this face and the magnet strips 44 and 46 become magnetically attracted to it.

As shown in Figure 2, the magnet strips 40,42,44 and 46 preferably protrude outwardly from the portions 30A and 30B of the attachment part 30 by lesser distances than the thickness of the adhesive tapes 32,34. Therefore, and, when the strip is fitted in position as shown in Figure 3, the adhesive tapes 32 and 34, which have a certain elasticity in compression, are held in a partially compressed state by the magnetic attraction by the magnet strips 40,42,44 and 46 and the flange 22. This helps to maintain strong adhesive connection between the adhesive tapes and the flange.

To ensure good adhesive contact between the adhesive tapes 32,34 and the flange 22, fixing pressure may be exerted by a roller tool.

During the initial stage of the mounting process, the protective ribbon 36 can be maintained in position so as to cover the external face of the adhesive tape 32 while temporarily securing part of the portion 30A to the flange by means of one of the magnet strips 40,42. The portion 30A can be slid into the correct position on the flange 22, this being permitted by the magnet strip. When the portion 30A is in the correct position, the ribbon 36 is peeled off and the portion 30A is then pressed into adhesive and magnetic contact with the flange. The other attachment portion 30B is then mounted in the same way.

The magnet strips 40,42,44 and 46 can be produced using a mixture of ferrite and a polymeric matrix, followed by the step of calendering and cutting or extrusion, vulcanisation, and then magnetisation by passage through a magnetic field of a strong permanent magnet. The magnet strips 40,42,44 and 46 can be incorporated into the attachment part 30 by a co-extrusion process using a cross-head extruder. Instead, the magnet strips 40,42,44 and 46 can be formed in situ using a multi-material die during the extrusion process of the strip, by introducing the polymeric material and the ferrite mixture separately into the die. Vulcanisation of the resultant profile is then carried out continuously followed by passage of the strip through a magnetic field for magnetisation. Magnetisation is carried out instantaneously and can therefore be effected at any speed of movement.

The use of adhesive tapes for mounting a sealing strip in position is advantageous because it normally provides a strong attachment force. However, a disadvantage is that the strength of the adhesive attraction reduces quite significantly as the ambient temperature increases, producing a tendency of disconnection. This is avoided in the strip shown in Figures 2 and 3, because the strip is also held in position by the magnetic attractive force exerted by the magnet strips 40,42,44 and 46, the magnetic force being little affected by increase in temperature.

On the other hand, the magnet strips 40,42,44 and 46 would not be satisfactory on their own (that is, in the absence of the adhesive tapes 32 and 34) because they have very low resistance to shear forces which would easily cause them to slide on the flange surfaces.

Therefore, the strip shown in Figures 2 and 3 obtains the advantages of the adhesive tape 32,34 (very secure fixing at normal temperatures) and of the magnet strips 40,42,44 and 46 (gripping force substantially independent of temperature) and at the same time avoids the separate disadvantages of the adhesive tape and the magnet strips.

Figure 4 shows a waist belt 50 embodying the invention. The waist belt 50 comprises a longitudinal attachment part 52 which is made of plastics or rubber material and is integral with a more flexible lip part 54. The waist belt 50 is secured to a panel 56 of a vehicle door, alongside the path of movement of the movable window glass (not shown). As shown in Figure 4, the attachment part 52 is secured in position in generally the same manner as shown in Figures 2 and 3 using adhesive 58 together with magnet strips 60 and 62 correspondingly generally to the magnet strips 40,42,44 and 46 of Figures 2 and 3. In this case, however, the strip is attached to one side, only, of the supporting structure (the body panel 56). There is therefore a reduced gripping effect, and the use of double-sided adhesive tape may not be sufficiently reliable. Instead, therefore, the adhesive 58 in Figure 4 is advantageously formed by a layer of cross-linked low temperature glue. The reaction time of such a glue is relatively long. However, this disadvantage is overcome by the use of the magnet strips 60,62 which hold the waist belt 50 in position during cross-linking of the glue. The magnet strips thus avoid "running" of the glue before cross-linking has been completed. Again, therefore, advantages are obtained by using the adhesive tape in combination with magnet strips.

The distal end of the lip 54 can be provided with flock 64 for low-friction contact with the window glass.

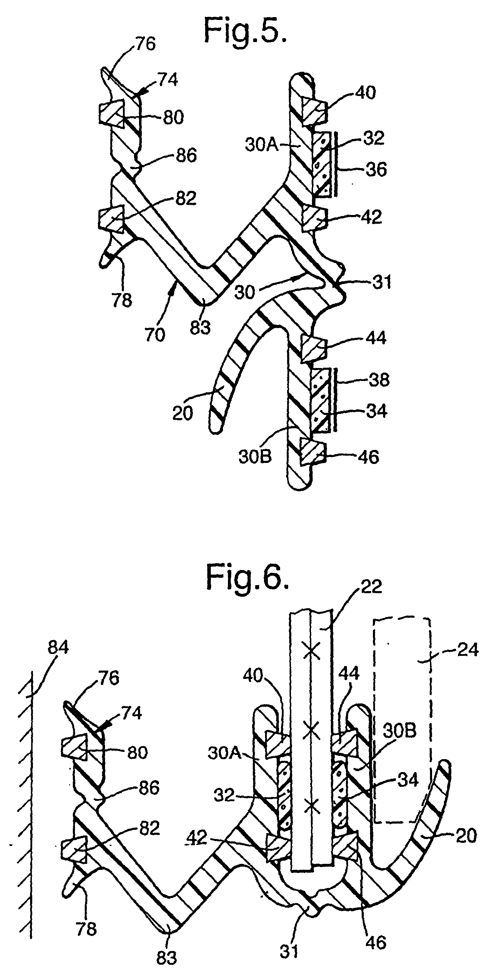

Parts in Figures 5 and 6 corresponding to those in Figures 2 and 3 are similarly referenced.

The strip shown in Figures 5 and 6 differs from the strip shown in Figures 2 and 3 in that the tubular sealing part 10 of the strip of Figures 2 and 3 is replaced by a sealing part 70 which, in this example, is co-extruded with the attachment part 30. The sealing part 70 presents a distal face 74 having flexible lips 76 and 78 extending along its two parallel longitudinal edges. Magnet strips 80 and 82, similar to the magnet strips 40,42,44 and 46 of Figures 2 and 3, are partially embedded in the face 74. The sealing part 70 has a flexible and integral hinge region 83.

Figure 6 shows the strip mounted in position. As with the strip of Figures 2 and 3, the strip of Figures 5 and 6 is mounted on the flange 22 extending around the door opening in a vehicle. The sealing part 70 is thus supported so as to face towards the closing door, shown at 84. When the door comes into contact with the sealing part 70, the magnet strips 80,82 become magnetically attracted to it and hold the sealing lips 76,78 in sealing contact with the door.

Where the closure member 84 is non-metallic (e.g. plastic), a metal ribbon can be attached to its surface which comes into contact with the face 74.

The configuration of the sealing part 70 allows it to accept large displacements while remaining very flexible. In addition, it can carry out its sealing function even if there is a substantial dimensional tolerance for the distance between the closed door and the flange 22. The sealing part 72 can be made of a thermoplastic elastomer or a thermoplastic material. It does not need to have the good mechanical properties of a tubular sealing part (such as shown in Figures 2 and 3), which normally require the use of a vulcanised rubber, and it can therefore more easily be coloured. A hinge portion 86 can be provided for increasing the flexibility of the sealing part.

In the strip of Figures 2 and 3 and of Figures 5 and 6, the double-sided adhesive tapes 32,34, may be replaced by respective layers of cross-linked low temperature glue similar to the glue 58 shown in the strip of Figure 4.

## Claims

1. A sealing, trimming or finishing strip, including an attachment part (30,52) for securing the strip in a mounted position against a mount (22), the attachment part (30,52) comprising both adhesive means (32,34,58) and magnetic means (40,42,44,46), **characterised in that** the adhesive means (32,34,58) protrudes further from the attachment part (30,52) than the magnetic means (40,42,44,46) before the strip is in the mounted position such that, in the mounted position, the magnetic means (40,42,44,46) holds the adhesive means (32,34,58) in compression against the mount (22).

2. A strip according to claim 1, **characterised in that** the adhesive means (32,34) comprises adhesive tape.

3. A strip according to claim 2, **characterised in that** the adhesive tape is double-sided adhesive tape having one face secured to the attachment part (30) and the other face covered by a removable protective cover (36,38).

4. A strip according to claim 1, **characterised in that** the adhesive means (58) comprises a cross-linked adhesive.

5. A strip according to any preceding claim, **characterised in that** the attachment part (30,52) comprises longitudinally extending flexible material, and **in that** the magnetic means comprises at least one magnet strip (40,42,44,46) mounted on and extending longitudinally along a mounting face of the flexible material.

6. A strip according to claim 5, **characterised in that** the adhesive means (32,34,58) extends in strip-like form along the mounting face of the flexible material and **in that** the magnetic means comprises two magnet strips (40,42,44,46) mounted on and extending longitudinally along the mounting face of the flexible material with the adhesive means (32,34,58) between them.

7. A strip according to claim 5 or 6, **characterised in that** the or each magnet strip (40,42,44,46) is at least partially held in position on the flexible material by a mechanical interlock.

8. A strip according to claim 7, **characterised in that** the or each magnet strip (40,42,44,46) is trapesoidal in cross-section with its larger cross-sectional dimension embedded in the flexible material.

9. A sealing, trimming or finishing strip for attachment to a mount (22), comprising longitudinally extending flexible material carrying magnetic means (40,42,44,46) and adhesive means (32,34) for magnetically and adhesively securing the flexible material to the mount (22), **characterised in that** the flexible material is formed as first and second attachment parts (30A,30B) secured together to form opposite sides of a channel for embracing the mount (22) and presenting first and second facing mounting surfaces, the magnetic means and the adhesive means (32,34) comprising first magnetic means (40,42,44,46) and first adhesive means (32) carried by the first mounting surface for magnetically and adhesively securing that surface to one face of the mount (22) and second magnetic means (40,42,44,46) and second adhesive means (34) carried by the second mounting surface for magnetically and adhesively securing that surface to an opposite face of the mount (22).

10. A strip according to claim 9, **characterised in that** each magnetic menas (40,42,44,46) is adapted to hold the adhesive means (32,34) in compression against the respective face of the mount (22).

11. A strip according to claim 9, **characterised in that** each magnetic means comprises at least one magnet strip (40,42,44,46) extending longitudinally along the respective surface and alongside the respective adhesive means (32,34) which also extends longitudinally along that surface.

12. A strip according to claim 11, **characterised in that** each adhesive means (32,34) protrudes more from the respective mounting surface than the or each magnet strip (40,42,44,46) thereon when the strip is not secured to the mount (22), whereby the adhesive means (32,34) is held under compression on the mount (22) by the magnetic attraction of the magnet strips (40,42,44,46).

13. A strip according to any one of claims 9 to 12, **characterised in that** each adhesive means (32,34) comprises a double-sided adhesive tape.

14. A strip according to any one of claims 9 to 12, **characterised in that** each adhesive means (32,34) comprises cross-linked adhesive.

15. A strip according to any one of claims 9 to 14, **characterised in that** the two attachment parts (30A,30B) are integrally hinged to each other by a flexible hinge portion (31) lying in the base of the channel.

16. A strip according to any one of claims 9 to 15, **characterised by** sealing means (10,70) attached to one of the attachment parts (30A,30B).

17. A strip according to any one of claims 1 to 15, **characterised by** sealing means attached to the or one of the attachment parts (30,30A,30B), the sealing means comprising flexible material (70) extending from the or the said one attachment part (30,30A,30B) and carrying further magnet means (80,82) for magnetically securing it in sealing configuration to a member to be sealed.

18. A method of securing a sealing, trimming or finishing strip in position on a mount, in which the strip is secured on the mount by both magnetic and adhesive securing, including the steps of applying adhesive to the strip, and placing the strip adjacent the mount with the adhesive in contact therewith and **characterised in that** the adhesive is a curable adhesive, and **in that** the method further includes the step of holding the strip magnetically to the mount so that the adhesive is under compression while the adhesive cures.

19. A method according to claim 18, **characterised in that** the curable adhesive is a cross-linked adhesive and the magnetic holding step holds the strip adjacent the mount during cross-linking of the adhesive.

## Patentansprüche

1. Dicht-, Trimm- oder Profilleiste, aufweisend Befestigungsteil (30,52) zum Sichern der Leiste in einer befestigten Position an einer Halterung (22), wobei das Befestigungsteil (30,52) sowohl klebende Teile (32, 34, 58) als auch magnetische Teile (40, 42, 44, 46) umfasst,
**dadurch gekennzeichnet,**
**dass**, bevor die Leiste in der befestigten Position ist, das magnetische Teil (32, 34, 58) weiter aus dem Befestigungsteil (30, 52) vorragt als das magnetische Teil (40, 42, 44, 46), so dass das magnetische Teil (40, 42, 44, 46) in der befestigten Position das geklebte Teil (32, 34, 58) gegenüber der Halterung (22) komprimiert hält.

2. Leiste nach Anspruch 1,
**dadurch gekennzeichnet, dass** das geklebte Teil (32, 34) ein Klebeband aufweist.

3. Leiste nach Anspruch 2,
**dadurch gekennzeichnet, dass** das Klebeband ein doppelseitiges Klebeband ist, dessen eine Seite sicher an dem Befestigungsteil (30) befestigt und dessen andere Seite durch eine entfernbare Schutzabdeckung (36, 38) bedeckt ist.

4. Leiste nach Anspruch 1,
**dadurch gekennzeichnet, dass** das geklebte Teil (58) einen vemetzten Klebstoff enthält.

5. Leiste nach einem der vorangegangenen Ansprüche,
**dadurch gekennzeichnet, dass** das Befestigungsteil (30, 52) ein langgestrecktes, flexibles Material enthält, und dass das magnetische Teil mindestens eine Magnetleiste (40, 42, 44, 46) enthält, die befestigt ist auf und sich in Längsrichtung entlang einer Befestigungsfläche des flexiblen Materials erstreckt.

6. Leiste nach Anspruch 5,
**dadurch gekennzeichnet, dass** das klebende Teil (32, 34, 58) sich in streifenähnlicher Form entlang der Befestigungsfläche des flexiblen Materials erstreckt, und dass das magnetische Mittel zwei Magnetleisten (40, 42, 44, 46) aufweist, die befestigt sind auf und sich in Längsrichtung entlang der Befestigungsfläche des flexiblen Materiais mit den Klebeteilen (32, 34, 58) dazwischen erstrecken.

7. Leiste nach Anspruch 5 oder 6,
**dadurch gekennzeichnet, dass** jede Magnetleiste (40, 42, 44, 46) zumindest teilweise auf dem flexiblen Material durch eine mechanische Verriegelung in Position gehalten wird.

8. Leiste nach Anspruch 7,
**dadurch gekennzeichnet, dass** die oder jede Magnetleiste (40, 42, 44, 46) im Querschnitt trapezförmig ist, wobei die größere Querschnittsausdehnung in das flexible Material eingebettet ist.

9. Dicht-, Trimm- oder Abdeckleiste zur Befestigung an einer Halterung (22) mit einem langgestreckten flexiblen Material, welches magnetische Mittel (40, 42, 44, 46) und klebende Mittel (32, 34) zum magnetischen und klebenden Befestigen des flexiblen Materials an der Halterung (22) trägt,
**dadurch gekennzeichnet,**
**dass** das flexible Material als erste und zweite Befestigungsteile (30A, 30B) geformt ist, welche miteinander befestigt sind um gegenüberliegenden Seiten einer die Halterung (22) umgreifenden Rinne zu bilden, und welche erste und zweite gerichtete Befestigungoberflächen darstellen, wobei die magnetischen Mittel und die klebenden Mittel (32, 34) erste magnetische Mittel (40, 42, 44, 46) und erste klebende Mittel (32) aufweisen, die durch die erste Befestigungsoberfläche getragen werden, um diese Oberfläche magnetisch und klebend an einer Seite der Halterung (22) zu befestigen, und zweite magnetische Mittel (40, 42, 44, 46) und zweite klebende Mittel (34), die durch die zweite Befestigungsoberfläche getragen werden, um diese Oberfläche magnetisch und klebend an der gegenüberliegenden Seite der Halterung (22) zu befestigen.

10. Leiste nach Anspruch 9,
**dadurch gekennzeichnet, dass** jedes magnetische Mittel (40, 42, 44, 46) derart ausgebildet ist, um die klebenden Mittel (32, 34) komprimiert gegen die entsprechende Fläche der Halterung (22) zu halten.

11. Leiste nach Anspruch 9,
**dadurch gekennzeichnet, dass** jedes magnetische Mittel mindestens eine Magnetleiste (40, 42, 44, 46) aufweist, die sich in Längsrichtung entlang der entsprechenden Oberfläche und entlang der entsprechenden klebenden Mittel (32, 34), die sich auch entlang dieser Oberfläche in Längsrichtung erstrecken, erstreckt.

12. Leiste nach Anspruch 11,
**dadurch gekennzeichnet, dass**, wenn die Leiste nicht sicher an der Halterung (22) befestigt ist, jedes klebende Mittel (32, 34) weiter von der entsprechenden Befestigungsoberfläche vorspringt als die oder jede Magnetleiste (40, 42, 44, 46) darauf, wodurch die klebenden Mittel (32, 34) auf der Halterung (22) durch die magnetische Anziehung der Magnetleisten (40, 42, 44, 46) komprimiert gehalten werden.

13. Leiste nach einem der Ansprüche 9 bis 12,
**dadurch gekennzeichnet, dass** jedes klebende Teil (32, 34) ein doppelseitiges Klebeband enthält.

14. Leiste nach einem der Ansprüche 9 bis12,
**dadurch gekennzeichnet, dass** jedes klebende Teil (32, 34) einen vernetzten Klebstoff enthält.

15. Leiste nach einem der Ansprüche 9 bis 14,
**dadurch gekennzeichnet, dass** die beiden Befestigungsteile (30A, 30B) über ein flexibles Gelenk (31), das in der Basis der Rinne liegt, einstückig zueinander schwenkbar sind.

16. Leiste nach einem der Ansprüche 9 bis 15,
**dadurch gekennzeichnet, dass** Dichtmittel (10, 70) an eines der Befestigungsteile (30A, 30B) befestigt sind.

17. Leiste nach einem der Ansprüche 1 bis 15,
**gekennzeichnet durch** Dichtmittel, die an das oder eines der Befestigungsteile (30, 30A, 30B) befestigt sind, wobei die Dichtmittel flexibles Material (70) aufweisen, welches sich von den oder einem Befestigungsteil (30, 30A, 30B) erstreckt und weitere magnetische Mittel (80, 82) trägt, um diese magnetisch in einer Dichtanordnung an ein abzudichtenden Teil zu befestigen.

18. Verfahren zum Befestigen einer Dicht-, Trimm- oder Abdeckleiste in Position auf einer Halterung, wobei die Leiste auf der Halterung sowohl durch magnetische als auch Klebstoffsicherungen befestigt wird, welches die Schritte des Aufbringens des Klebstoffs auf die Leiste und des Positionierens der Leiste neben die Halterung umfasst, so dass diese mit dem Klebstoff in Kontakt kommt und
**dadurch gekennzeichnet,**
**dass** der Klebstoff ein härtbarer Klebstoff ist und dass das Verfahren weiterhin den Schritt des magnetischen Haltens der Leiste an der Halterung umfasst, so dass der Klebstoff komprimiert ist, während der Klebstoff aushärtet.

19. Verfahren nach Anspruch 18,
**dadurch gekennzeichnet, dass** der härtbare Klebstoff ein vemetzbarer Klebstoff ist und dass der magnetische Halteschritt die Leiste während der Vernetzung des Klebstoffs neben der Halterung hält.

## Revendications

1. Bande de scellage, d'ébarbage ou de polissage comprenant une pièce de fixation (30, 52) destinée à fixer la bande dans une position montée contre un support (22), la pièce de fixation (30, 52) comprenant des moyens adhésifs (32, 34, 58) et des moyens magnétiques (40, 42, 44, 46) , **caractérisée en ce que** les moyens adhésifs (32, 34, 58) font saillie plus loin par rapport à la pièce de fixation (30, 52) que les moyens magnétiques (40, 42, 44, 46) avant que la bande ne soit dans la position montée de sorte que, dans la position montée, les moyens magnétiques (40, 42, 44, 46) retiennent les moyens adhésifs (32, 34, 58) comprimés contre le support (22).

2. Bande selon la revendication 1, **caractérisée en ce que** les moyens adhésifs (32, 34) comprennent un ruban adhésif.

3. Bande selon la revendication 2, **caractérisée en ce que** le ruban adhésif est un ruban adhésif à double face ayant une face fixée sur la pièce de fixation (30) et l'autre face recouverte par une couche protectrice amovible (36, 38).

4. Bande selon la revendication 1, **caractérisée en ce que** les moyens adhésifs (58) comprennent un adhésif réticulé.

5. Bande selon l'une quelconque des revendications précédentes, **caractérisée en ce que** la pièce de fixation (30, 52) comprend un matériau souple s'étirant de manière longitudinale et **en ce que** les moyens magnétiques comprennent au moins une bande magnétique (40, 42, 44, 46) montée sur et s'étirant de manière longitudinale le long d'une face de montage du matériau souple.

6. Bande selon la revendication 5, **caractérisée en ce que** les moyens adhésifs (32, 34, 58) s'étirent selon une forme en bande le long de la face de montage du matériau souple et **en ce que** les moyens magnétiques comprennent deux bandes magnétiques (40, 42, 44, 46) montées sur et s'étirant de manière longitudinale le long de la face de montage du matériau souple avec les moyens adhésifs (32, 34, 58) entre eux.

7. Bande selon la revendication 5 ou 6, **caractérisée en ce que** la ou chaque bande magnétique (40, 42, 44, 46) est au moins partiellement maintenue en position sur le matériau souple par un enclenchement solidaire.

8. Bande selon la revendication 7, **caractérisée en ce que** la ou chaque bande magnétique (40, 42, 44, 46) présente une coupe transversale trapézoïdale avec sa plus grande dimension transversale noyée dans le matériau souple.

9. Bande de scellage, d'ébarbage ou de polissage destinée à être fixée sur un support (22), comprenant un matériau souple s'étirant de manière longitudinale comportant des moyens magnétiques (40, 42, 44, 46) et des moyens adhésifs (32, 34) afin de fixer de manière magnétique et adhésive le matériau souple sur le support (22), **caractérisée en ce que** le matériau souple est constitué de première et seconde parties de fixation (30A, 30B) fixées ensemble de manière à former les côtés opposés d'un canal destiné à entourer le support (22) et présentant des première et seconde surfaces de montage se faisant face, les moyens magnétiques et les moyens adhésifs comprenant des premiers moyens magnétiques (40, 42, 44, 46) et des premiers moyens adhésifs (32, 34) soutenus par la première surface de montage afin de fixer de manière magnétique et adhésive cette surface sur une face du support (22) et des seconds moyens magnétiques (40, 42, 44, 46) et des seconds moyens adhésifs (32, 34) soutenus par la seconde surface de montage afin de fixer de manière magnétique et adhésive cette surface sur une face opposée du support (22).

10. Bande selon la revendication 9, **caractérisée en ce que** chaque moyen magnétique (40, 42, 44, 46) est adapté pour retenir les moyens adhésifs (32, 34) comprimés contre la face respective du support (22).

11. Bande selon la revendication 9, **caractérisée en ce que** chaque moyen magnétique comprend au moins une bande magnétique (40, 42, 44, 46) s'étirant de manière longitudinale le long de la surface respective et le long du moyen adhésif respectif (32, 34) qui s'étire également de manière longitudinale le long de cette surface.

12. Bande selon la revendication 11, **caractérisée en ce que** chaque moyen adhésif (32, 34) fait davantage saillie depuis la surface de montage respective que la ou chaque bande magnétique (40, 42, 44,46) située dessus lorsque la bande n'est pas fixée sur le support (22), moyennant quoi les moyens adhésifs (32, 34) sont maintenus comprimés sur le support (22) par l'attraction magnétique des bandes magnétiques (40, 42, 44, 46).

13. Bande selon l'une quelconque des revendications 9 à 12, **caractérisée en ce que** chaque moyen adhésif (32, 34) comprend un ruban adhésif à double face.

14. Bande selon l'une quelconque des revendications 9 à 12, **caractérisée en ce que** chaque moyen adhésif (32, 34) comprend un adhésif réticulé.

15. Bande selon l'une quelconque des revendications 9 à 14, **caractérisée en ce que** les deux pièces de fixation (30A, 30B) sont intégralement articulées l'une par rapport à l'autre avec une partie d'articulation souple (31) située à la base du canal.

16. Bande selon l'une quelconque des revendications 9 à 15, **caractérisée par** des moyens de scellage (10, 70) fixés sur l'une des pièces de fixation (30A, 30B).

17. Bande selon l'une quelconque des revendications 1 à 15, **caractérisée par** des moyens de scellage fixés sur les ou une des pièces de fixation (30, 30A, 30B), les moyens de scellage comprenant un matériau souple (70) s'étirant depuis la ou ladite pièce de fixation (30, 30A, 30B) et comportant d'autres moyens magnétiques (80, 82) afin de la fixer de manière magnétique en configuration de scellage sur un membre devant être scellé.

18. Procédé de fixation d'une bande de fermeture, d'ébarbage ou de polissage en position sur un support, dans lequel la bande est fixée sur le support par une fixation à la fois magnétique et adhésive, comprenant les étapes d'application de l'adhésif sur la bande et de positionnement de la bande de manière adjacente au support avec l'adhésif en contact avec celui-ci et **caractérisé en ce que** l'adhésif est un adhésif thermodurcissable et **en ce que** le procédé comprend également l'étape de maintien magnétique de la bande sur le support de sorte que l'adhésif soit comprimé pendant que l'adhésif durcit.

19. Procédé selon la revendication 18, **caractérisé en ce que** l'adhésif thermodurcissable est un adhésif réticulé et **en ce que** l'étape de maintien magnétique maintient la bande de manière adjacente au support pendant la réticulation de l'adhésif.
